# EUROPEAN PATENT APPLICATION

(11) **EP 2 384 631 A1**
(43) Date of publication of application: **09.11.2011**
(21) Application number: 11003604.3
(22) Date of filing: 03.05.2011
(51) Int. Cl.: A21D 13/08, A21D 13/00

(54) **Biscuit**

(30) Priority: 30.04.2010 GB 1007277
(71) Applicant: Northern Foods PLC, Thorpe Park Leeds LS15 8ZB (GB)
(72) Inventor: Pope, Simon, Batley, West Yorkshire WF17 5JE (GB); Jackson, Ian, Kirkham, Preston Lancashire PR4 3AY (GB)
(74) Representative: Harrison, Michael Robert

(57) **Abstract**

A biscuit has a greatest dimension of approximately 40mm and is coated with an even layer of icing with a thickness of up to 1.5mm and with a consistent appearance. The thickness of the coating over substantially the entire area of the coating is preferably within 25% of the average thickness of the coating.

## Description

### Field of the Invention

The present invention relates to a confectionary product of the biscuit type which is also a fun time snack.

### Background to the Invention

Various bakery confectionary products have been produced for very many years. Biscuits are known in various shapes and sizes with, in some cases, surface decorations made of the biscuit itself or of other edible materials such as icing. A well-known product is Fox's Party Iced Rings, which are biscuits of annular shape having an external diameter of approximately 45mm and an internal diameter of approximately 12mm.

Where the product is of a size the same as or similar to that of Fox's Party Iced Rings, then it is possible to make a biscuit of acceptable quality by careful control of the level of icing. Excess icing results in voids and cavities and an unacceptably hard consumer eat. Too little icing results in gaps and patches which are unacceptable to consumers because of the visual appearance of the product.

The processes used for the production of Fox's Party Iced Rings would, if applied to a smaller biscuit lead to a product with a very uneven layer of icing which is liable to be both too hard and too brittle and of unacceptable appearance.

### Statements of the Invention

According to the present invention there is provided a biscuit having a greatest dimension of approximately 40mm and being coated with an even layer of icing having a thickness of up to 1.5mm and with a consistent appearance.

Preferably, the thickness of the coating over substantially the entire area of the coating is within 25% of the average thickness of the coat.

Preferably, the product is substantially circular and more preferably is annular.

The present invention provides a biscuit of small size. In a preferred embodiment the biscuit is annular, thereby representing a miniature version of Fox's Party Iced Rings.

The external diameter of the product is preferably from 25mm to 40mm.

The internal diameter of the product is preferably between 9mm and 12mm. Accordingly, it is considered that the biscuit having a hole of this diameter may be placed on a finger, thereby providing amusement and fun.

Preferably, the overall thickness of the product is from 5 to 8mm.

Preferably, the total calorie content of the biscuit is from 7 to 21 Kcal. A preferred carbohydrate range is from 3.6g to 1.2g per biscuit. A preferred sugar content is from 1.9g to 0.6g per biscuit.

Preferably, the ratio of icing layer to biscuit layer proportions is from 9:41 to 8:17 by weight.

The present invention also provides a method for making a biscuit of the invention comprising feeding the biscuit within a substantially enclosed space through a vertically descending film of molten icing, said film being produced by force-feeding molten icing through an elongate aperture extending transversely of the path of travel of the biscuit.

### Brief Description of the Drawing

The accompanying drawings are as follows:

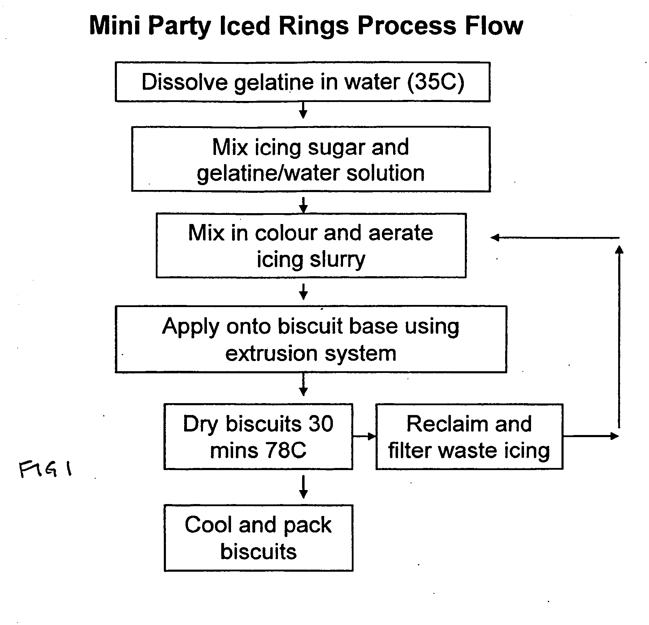

Figure 1 is a flow diagram showing the process for preparing an embodiment of the biscuit in accordance with the present invention; and
Figure 2 is a table giving food values including those of biscuits in accordance with the present invention.

### Detailed Description of the Invention

The invention will now be described, by way of example only, with reference to the accompanying drawing.

An annular small-sized biscuit in accordance with the present invention was made from the following ingredients:-
Wheatflour
Sugar
Vegetable Oil
Glucose Syrup
Salt
Raising Agents: Ammonium Bicarbonate, Sodium Bicarbonate, Disodium Diphosphate
Partially Inverted Refiners Syrup
Gelatine
Colours: Carmine, Beta-Carotene, Natural Flavouring
Emulsifier: Soya Lecithin, Hydrolysed Wheat Gluten, Glycerine
Acidity Regulator: Citric Acid

In order to make the biscuit a biscuit base is prepared. Separately gelatine is dissolved in water at a temperature of about 35°C. The gelatine/water solution is mixed with icing sugar and colours are mixed in and the resultant icing slurry aerated.

[The biscuit is transported on a continuous conveyor through a housing within which an icing layer is applied. This is achieved by pump feeding the icing slurry through an elongate aperture so that it descends under pressure as an extruded curtain through which the biscuit passes.]

The biscuits are then dried for about thirty minutes at a temperature of about 78°C. Waste icing is reclaimed and fed back to the stage at which colour is mixed in and the slurry is aerated.

The dried biscuits are cooled and packed.

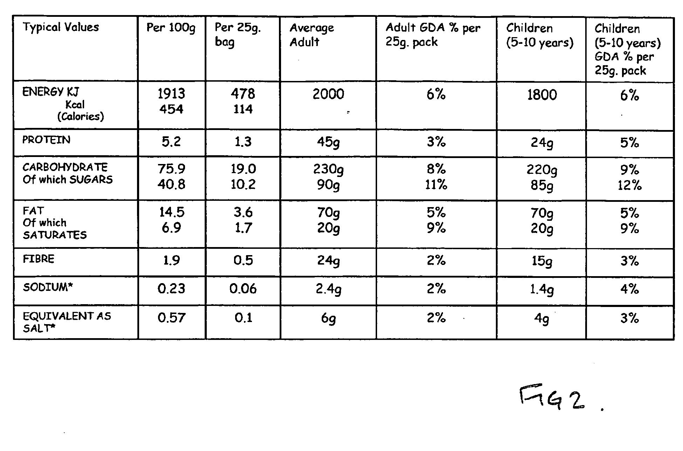

Figure 2 is a table giving food values for a biscuit in accordance with the present invention.

## Claims

1. A biscuit having a greatest dimension of approximately 40mm being coated with an even layer of icing with a thickness of up to 1.5mm and with a consistent appearance.

2. A biscuit according to claim 1, wherein the thickness of the coating over substantially the entire area of the coating is within 25% of the average thickness of the coating.

3. A biscuit according to claim 1 or claim 2, wherein the biscuit is substantially circular.

4. A biscuit according to claim 3, wherein the external diameter of the biscuit is from 25mm to 40mm.

5. A biscuit according to claim 4, wherein the product is annular.

6. A biscuit according to claim 5, wherein the internal diameter is between 9 and 12mm.

7. A biscuit according to any of the preceding claims, wherein the overall thickness of the product is from 5 to 8mm.

8. A biscuit according to any of the preceding claims, wherein the total calorie content of the biscuit is from 7 to 21 Kcal.

9. A biscuit according to any of the preceding claims wherein the carbohydrate content is from 3.6g to 1.2g.

10. A biscuit according to any of the preceding claims, wherein the sugar content is from 1.9g to 0.6g.

11. A biscuit according to any of the preceding claims, wherein the ratio of icing layer to biscuit layer proportions is from 9:41 to 8:17 by weight.

12. A method of making a biscuit according to any of the preceding claims comprising feeding the biscuit within a substantially enclosed space through a vertically descending film of molten icing, said film being produced by force-feeding molten icing through an elongate aperture extending transversely of the path of travel of the biscuit.
